# NEUE EUROPÄISCHE PATENTSCHRIFT

(11) **EP 1 280 399 B2**
(45) Veröffentlichungstag und Bekanntmachung des Hinweises auf die Entscheidung über den Einspruch: **04.05.2011**
(45) Hinweis auf die Patenterteilung: 15.03.2006
(21) Anmeldenummer: 01949332.9
(22) Anmeldetag: 09.05.2001
(51) Int. Cl.: A01J 5/04

(54) **SCHLAUCHHÜLSE FÜR EINEN MELKSCHLAUCH**
TUBE SLEEVE FOR A MILKING TUBE
GAINE POUR TUYAU FLEXIBLE DE TRAITE

(30) Priorität: 10.05.2000 DE 10022716
(43) Veröffentlichungstag der Anmeldung: 05.02.2003
(73) Patentinhaber: Maier, Jakob, Jun., 86842 Türkheim (DE)
(72) Erfinder: MAIER, Jakob, Jun., 86842 Türkheim (DE); HATZACK, Wilfried, 86842 Türkheim (DE)
(74) Vertreter: Grünecker, Kinkeldey, Stockmair & Schwanhäusser Anwaltssozietät
(86) Internationale Anmeldenummer: PCT/EP2001/005293
(87) Internationale Veröffentlichungsnummer: WO 2001/084913

(56) Entgegenhaltungen:
- DE-A- 1 607 023
- DE-C- 19 922 131
- GB-A- 2 145 915
- US-A- 3 999 516
- US-A- 4 869 205

## Beschreibung

Die vorliegende Erfindung betrifft eine automatische Melkanlage mit einem Melkbecher und einem Zitzengummi, der über einen flexiblen Verbindungsschlauch mit einem Sammelstück zum Auffangen gemolkener Milch und zum Übertragen eines zum Melken notwendigen Unterdrucks verbunden ist, wobei das Sammelstück einen Anschlussstutzen für besagten flexiblen Verbindungsschlauch aufweist.

In automatischen Melkanlagen werden elastische bzw. flexible Schlauchverbindungen verwendet, um einerseits den Milchstrom vom Euter des Tieres zu einem geeigneten Sammelbehälter zu leiten, und andererseits das zur Milchextraktion notwendige Melkvakuum an der Zitze bereitzustellen.

In der deutschen Patentanmeldung mit dem Aktenzeichen 199 22 131.6 wird ein flexibler Milchschlauch für eine automatische Melkanlage beschrieben. In dieser bekannten Melkanlage wird die Milch mittels einem mit einem weichen Zitzengummi ausgekleidetem Melkbecher während der Saugphase aus der Zitze angesaugt. Während dieser Saugphase haftet der Melkbecher ausschließlich aufgrund des in der Anlage vorherrschenden Betriebsvakuums an der Zitze. Die abgesaugte Milch gelangt dann über einen flexiblen Verbindungsschlauch, den sogenannten kurzen Milchschlauch, in ein Mehrwegeventil bzw. ein Sammelstück, aus dem die Milch dann in unterschiedlichen Leitungssystemen in einen Sammelbehälter weitergeleitet wird. Die Melkbecher sind im wesentlichen. über die vier kurzen Milchschläuche mit dem Mehrwegeventil und damit auch untereinander mechanisch gekoppelt. Die kurzen Milchschläuche müssen sowohl den Milchstrom als auch das Betriebsvakuum übertragen, so dass ein Innendurchmesser von 9 bis 12 mm erforderlich ist. Dies bedeutet, dass die Milchschläuche einerseits einen relativ großen Innendurchmesser aufweisen müssen, aber andererseits eine ausreichende mechanische Stabilität zeigen müssen, um sich beim Anlegen des Melkvakuums nicht nennenswert zu verformen und den beim Melkvorgang und der Handhabung der Melkanlage auftretenden mechanischen Belastungen zu widerstehen. Ferner muss gemäß den Hygieneverordnungen gewährleistet sein, dass keinerlei Fremdstoffe aus den Leitungen, wie etwa dem Milchschlauch, oder aus den Behältem, in die Milch übergehen, um die Belastung mit Schadstoffen, Bakterien oder dergleichen unter einem, z.B. in der Milchverordnung spezifizierten Grenzwert zu halten. Für die Gesundheit der Tiere ist es wichtig, einen hohen Hygienestandard in der Melkanlage zu gewährleisten und insbesondere Infektionen des Euters durch bakterielle Belastung der Melkanlage zu verhindern. Aus diesem Grunde müssen sich nach Gebrauch der Melkanlage Milchreste, insbesondere aus den flexiblen Zuleitungen sowie den entsprechenden Anschlussbereichen, rückstandslos entfernen lassen, um somit die Bakterienbildung in der Anlage und damit eine Beeinträchtigung der Milch sowie des Euters des Tieres auf ein Minimum zu reduzieren.

US 4,869,205 einen Endbereich eines Milchschlauches, der mit einem Zitzengummi kombiniert ist, wobei der Endbereich einen Verstärkungsabschnitt in der Nähe des äußeren Endes des Anschlussstutzens des Milchsammeistücks aufweist, um damit ein hohes Maß an Flexibilität bei gleichzeitiger Dichtigkeit zu gewährleisten. Ferner zeigt die DE-OS-1607023 ein Melkkreuz mit Anschlußstutzen für zu Zitzengummis führenden Schläuchen, wobei Schutzhülsen über die Schlauchenden geschoben sind. Die Schutzhülsen weisen einen kreisförmigen Querschnitt auf und haben am nach außen gerichteten Ende eine Schmiegekante, an der der Milchschlauch bei herabhängenden Zitzengummis abknickt.

Es ist daher eine Aufgabe der vorliegenden Erfindung, eine Verbesserung der bekannten Melkanlage dahingehend zu erreichen, dass insbesondere an den Anschlussstellen, an denen flexible Elemente mit starren Elementen verbunden sind, die Eigenschaften der Anlage, insbesondere in Bezug auf deren Reinigung, und die Dichtigkeit der abgeknickten Milchschläuche bei herabhängenden Melkbechern verbessert werden.

Diese Aufgabe wird durch eine automatische Melkanlage mit den Merkmalen des Anspruchs 1 gelöst.

Vorzugsweise beträgt das Verhältnis der Länge der Schlauchhülse zu ihrem Innendurchmesser mindestens 1,5.

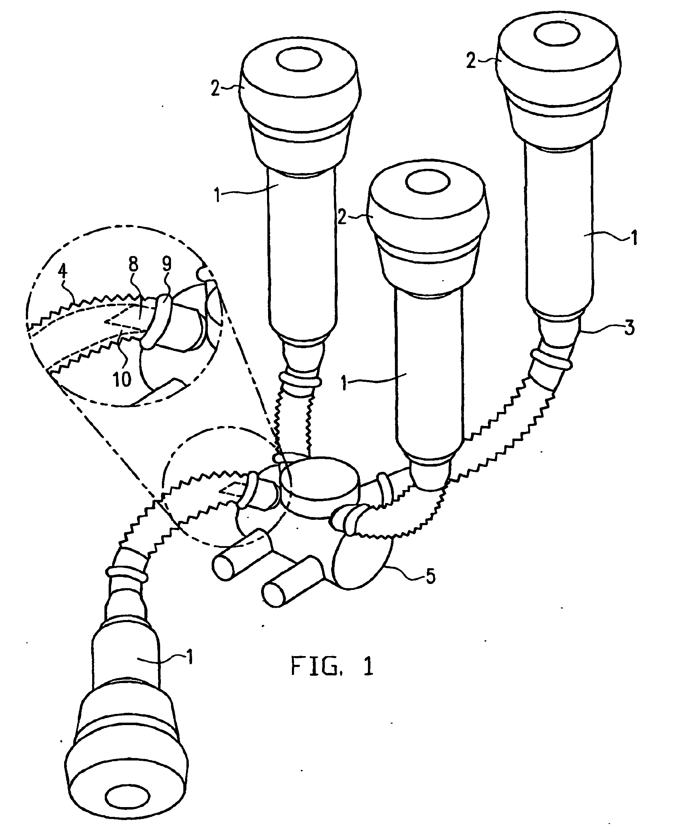

Zur Verdeutlichung des Vorteils, den die vorliegende Erfindung gegenüber dem Stand der Technik bietet, sei hier mit Bezug zu Fig. 1 die bekannte Melkanlage detailliert beschrieben. Fig. 1 zeigt den prinzipiellen Aufbau eines Melkzeuges unter Verwendung von kurzen Milchschläuchen. Bezugsziffer 1 bezeichnet die vier Melkbecher, an deren einem Ende die Ausstülpung eines Zitzengummis (2) ausgebildet ist. Am anderen Ende des Melkbechers 1 befindet sich ein Auslaßstutzen3, über den ein Endbereich 9 eines kurzen Milchschlauchs 4 geschoben ist. Das andere Ende des Milchschlauchs 4 ist über eine Anschlussstutzen 8 eines Mehrwegeventils bzw. Sammelstücks 5 geschoben. In Fig. 1 sind drei der Melkbecher 1 nahezu vertikal ausgerichtet. Dies entspricht im wesentlichen der Betriebsstellung der Melkbecher 1 während des Melkens. Der vierte Melkbecher ist in hängender Position dargestellt, die sich beispielsweise immer dann ergibt, wenn der Melkbecher von der Zitze entfernt wird, beispielsweise, wenn begonnen wird, die Melkbecher von einem zu Ende gemolkenen Tier abzunehmen.

Durch die Biegung des Melkschlauchs 4 am Übergang zum Anschlussstutzen 8 bildet sich dabei zwischen dem Milchschlauch und dem Anschlussstutzen ein kleiner Zwischenbereich 10 zwischen der Innenoberfläche des Milchschlauchs 4 und der gegenüberliegenden Außenfläche des Anschlussstutzens 8. Durch diesen Zwischenbereich 10 werden die Außenfläche des Anschlussstutzens 8 sowie die entsprechende Oberfläche der Innenseite des Milchschlauchs 4 mit Milch benetzt, die nach dem Lösen des Melkbechers 1 von der Zitze noch im Leitungsbereich vom Melkbecher zum Sammelstück 5 vorhanden ist. Beim anschließenden Weitermelken und insbesondere bei der Reinigung des Melkzeuges befinden sich die Melkbecher 1 wieder in der Betriebsstellung, d.h. alle Milchschläuche sind in der durch die Anschlussstutzen bestimmten Vorzugsrichtung orientiert und somit bildet sich der Zwischenbereich 10 zwischen dem Anschlussstutzen 8 und dem kurzen Milchschlauch 4 nicht aus. Demzufolge findet keine Reinigung der mit Milch benetzten Oberfläche am Anschlussstutzen 8 und am Milchschlauch 4 statt. Dies führt zu einer Bakterienbildung in diesem Bereich, die letztlich sowohl die Milchqualität als auch die Gesundheit des Euters des Tieres beeinträchtigt.

In der erfindungsgemäßen Melkanlage und auch durch die erfindungsgemäße Schlauchhülse, die über den Anschlussstutzen 8 hinausragt, wird nun diese Ausbildung des Zwischenbereichs 10 vermieden, da beim Abknicken des Milchschlauchs die entstehende Biegekante bzw. Knickkante in größerem Abstand vor einem milchführenden Bereich des Anschlussstutzens liegt, so dass damit ein verbesserter Reinigungseffekt während des Spülens erzielt wird.

In der erfindungsgemäßen Melkanlage mit einem Anschlussstutzen mit asymmetrisch ausgebildeter Öffnung wird bei Verwendung einer Hülse am Anschlussstutzen oder im flexiblen Verbindungsschlauch ebenfalls die gewünschte Wirkung erreicht Dies beruht darauf, dass die Hülse, die in diesem Falle auch als Innenhülse bezeichnet werden kann, zumindest bündig mit der asymmetrischen Öffnung des Anschlussstutzens abschließt, wodurch beim Abknicken des flexiblen Verbindungsschlauchs im Bereich des kleineren Biegeradius eine ins Schlauchinnere gerichtete Kraft auftritt, die damit ein partielles Ablösen des Verbindungsschlauchs und damit die Ausbildung des Zwischenbereichs 10 wirkungsvoll verhindert.

Ein weiterer Vorteil ergibt sich dadurch, dass beim Abknicken der flexiblen Verbindungsschläuche beim Abziehen des Melkbechers durch die erfindungsgemäße exakte axiale Festlegung des Knickbereichs des Verbindungsschlauchs der Unterdruck im Sammelstück erhalten bleibt, da der Knickbereich das Sammelstück gegenüber den äußeren Druck aus dem nunmehr nach unten hängenden Melkbecher abdichtet. Die ist besonders beim Abnehmen des Melkgeschirrs vorteilhaft, da bei Verlust des Unterdrucks an den verbleibenden, sich noch an den Zitzen befindlichen Melkbechem, diese dann einfach abfallen würden.

Durch die Schlauchhülse ergibt sich eine Versteifung des flexiblen Verbindungsschlauchs über den milchführenden Bereich hinaus, so dass kein Ablösen des Schlauches vom Anschlussstutzen stattfindet. Femer lässt sich eine bestehende Melkanlage in einfacher Weise nachrüsten, so dass die erfindungsgemäßen Vorteile auch bei älteren Anlagen genutzt werden können.

Femer ergibt sich durch die asymmetrische Ausbildung der Vorteil, dass die im allgemeinen asymmetrisch ausgebildet Öffnung des Anschlussstutzens durch den zweiten Endbereich in etwa nachgebildet ist, so dass eine Ausbildung des Zwischenbereichs vermieden wird, aber die Öffnung des Anschlussstutzens beobachtbar bleibt, sofern der Milchschlauch aus einem zumindest teilweise durchsichtigen Material besteht. Femer lässt sich die Schlauchhülse leicht aufstecken und abnehmen.

In einer weiteren vorteilhaften Weiterbildung der Erfindung weisen der abgewandte Endbereich und der andere Endbereich der Schlauchhülse einen kreisförmigen Querschnitt auf.

Durch diese Ausbildung der beiden Endbereichs lässt sich ein leichtes Anbringen der Schlauchhülse auf dem Milchschlauch sowie eine kostengünstige Herstellung der Schlauchhülse gewährleisten.

In einer bevorzugten Weiterbildung weist der abgewandte Endbereich einen ovalen Querschnitt auf.

Durch den ovalen Querschnitt des zweiten Endbereichs wird der Milchschlauch leicht deformiert, so dass sich eine Vorzugsrichtung beim Knicken entlang des größeren Durchmessers des Querschnitts ausbildet, wodurch ein Knicken des Milchschlauchs in einer unerwünschten Richtung verhindert werden kann.

In einer weiteren bevorzugten Ausführungsform der Erfindung weist der zweite Endbereich teilweise an seiner Innenwand eine Vertiefung und/oder eine Erhebung auf, die mit einer entsprechenden Erhebung und/oder Vertiefung an der Außenwand des flexiblen Verbindungsschlauchs in Eingriff bringbar ist.

Durch diese Maßnahme wird eine dauerhafte und zuverlässige Verbindung zwischen der Schlauchhülse und dem Verbindungsschlauch erreicht, wobei die relative Lage der Schlauchhülse und des Milchschlauches zueinander durch das "Einrasten" der entsprechenden Vertiefung bzw. Erhebung bestehen bleibt.

Vorteilhafterweise ist die Schlauchhülse aus einem Teil hergestellt.

Dies erlaubt eine kostengünstige und wirtschaftliche Produktion der Schlauchhülse.

In einer bevorzugten Weiterbildung der Erfindung umfasst die Schlauchhülse eine Spannvorrichtung zum Festklemmen der Schlauchhülse auf dem Milchschlauch.

Dadurch lässt sich ein leichtes Anbringen auf dem Milchschlauch sowie eine zuverlässige Befestigung gewährleisten.

In einer bevorzugten Weiterbildung der Erfindung umfasst die Schlauchhülse zwei Schalenteile.

Damit lässt sich in einfacher Weise die Schlauchhülse auf dem Milchschlauch befestigen, wenn der Milchschlauch bereits auf den Anschlussstutzen des Sammelstücks befestigt ist.

Vorteilhafterweise sind die zwei Schalenteile durch ein Schamierelement verbunden.

Vorteilhafterweise ist die Schlauchhülse zumindest teilweise aus einem unelastischen Material hergestellt.

Dadurch ergibt sich eine hohe mechanische Beanspruchbarkeit, beispielsweise, wenn der Huf des Tieres mit der Schlauchhülse in Kontakt kommt, und dabei ein Teil des Gewichts des Tieres von der Schlauchhülse aufzunehmen ist.

In der erfindungsgemäßen Melkanlage weist der flexible Verbindungsschlauch in Richtung zur Schlauchmitte eine Sollknickstelle vor dem versteiften Bereich auf.

Durch das Bereitstellen einer Sollknickstelle vor der Schlauchhülse wird sichergestellt, dass der Milchschlauch unter Ausbildung einer markanten Knickkante abknickt, wenn der Melkbecher von der Zitze abgenommen wird und nach unten hängt. Mittels dieser markanten Knickkante verbessert sich die Dichtfähigkeit des Milchschlauchs zur Abgrenzung des Melkvakuums, das im Sammelstück weiterhin anliegt, gegenüber dem durch den offenen Melkbecher an der Knickkante anstehende atmosphärischen Druck auch bei pendelnder Bewegung des oder der nach unten hängenden Melkbechers bzw. Melkbecher.

In einer weiteren bevorzugten Weiterbildung ist der flexible Verbindungsschlauch zumindest teilweise transparent und der abgewandte Endbereich der Schlauchhülse weist einen Ausschnitt auf, derart, dass im aufgeschobenen Zustand der Endbereich des Anschlussstutzens sichtbar ist.

Damit lässt sich der Zustand des Anschlussstutzens sowie die Oberflächenbenetzung am Endbereich des Anschlussstutzens in einfacher Weise beobachten.

Femer ist vorteilhafter Weise der flexible Verbindungsschlauch einstückig mit dem Zitzengummi ausgebildet.

Weiterhin kann die Hülse für die asymmetrische Öffnung des Anschlussstutzens als separate, entfembare Hülse, oder als integraler Bestandteil des flexiblen Verbindungsschlauch vorgesehen sein.

Weitere vorteilhafte Weiterbildungen gehen aus den Unteransprüchen hervor.

Die Erfindung soll nun anhand der beiliegenden Zeichnungen näher erläutert und beschrieben werden. Es zeigen:
- Fig. 1: eine prinzipielle dreidimensionale Darstellung eines Melkzeugs;
- Fig. 2: eine schematische Seitenansicht eines Teils des Melkzeugs, wobei lediglich ein flexibler Verbindungsschlauch, sowie eine Schlauchhülse und ein Anschlussstutzen dargestellt sind;
- Fig. 3a und 3b: eine schematische Seitenansicht und einen Querschnitt eines Teils des Melkzeugs, wobei lediglich ein Verbindungsschlauch, sowie eine Schlauchhülse und ein Anschlussstutzen dargestellt sind; und
- Fig.4: eine Ausführungsform der Erfindung, wobei lediglich ein Verbindungsschlauch mit Sollknickstelle, sowie eine Schlauchhülse und ein Anschlussstutzen dargestellt sind.

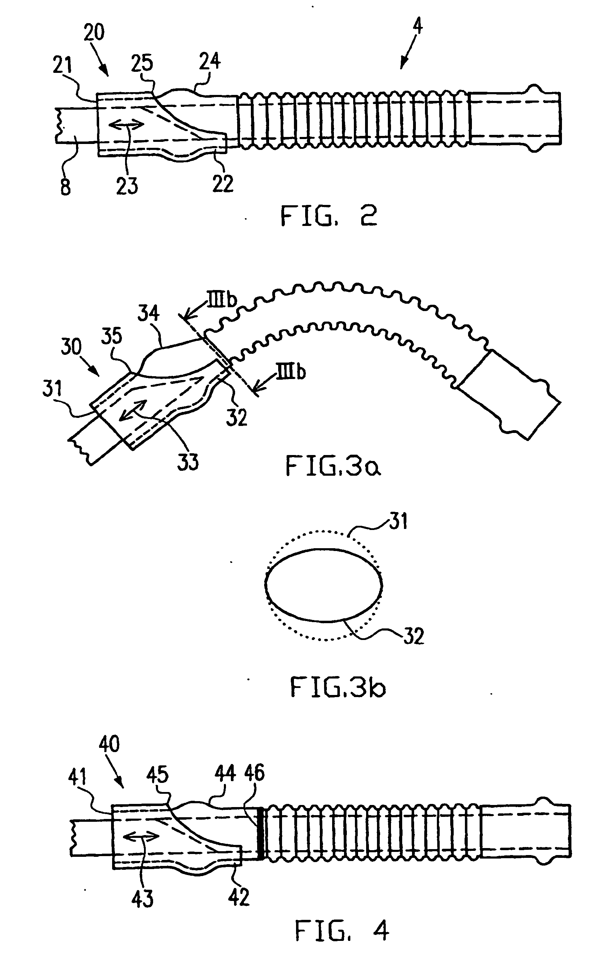

Mit Bezug zu Fig. 2 werden nun Teile des Melkzeugs beschrieben. Ferner sind Teile, die bereits in Zusammenhang mit Fig. 1 oben erläutert wurden, mit den gleichen Bezugszeichen belegt und deren Beschreibung wird weggelassen.

In Fig. 2 ist in schematischer Seitenansicht eine Schlauchhülse 20 sowie ein kurzer Milchschlauch 4 dargestellt. Die Schlauchhülse 20 weist einen ersten Endbereich 21 und einen zweiten Endbereich 22 auf. Der zweite Endbereich 22 ist so ausgebildet, dass sein, in der Fig. 2 unten dargestellter Bereich, etwa ein Viertel des Gesamtradius der Schlauchhülse umfasst. Ferner ist in diesem unteren Bereich radial in der Innenseite der Schlauchhülse eine Vertiefung ausgebildet, die beim Aufschieben der Schlauchhülse in der durch den Pfeil 23 angezeigten Richtung in eine Erhebung 24 des Milchschlauchs 4 eingreift. Ferner ist ein Anschlussstutzen 8 eines nicht gezeigten Sammelstücks als gestrichelte Linie eingezeichnet, um die Lage des Anschlussstutzens 8 relativ zur Lage der Schlauchhülse 20 darzustellen, nachdem die Schlauchhülse einschließlich des Milchschlauchs 4 auf dem Anschlussstutzen 8 aufgeschoben worden ist. Wie aus der Abbildung ersichtlich ist, wird durch die Versteifung mittels der Schlauchhülse 20, die sich über die Länge des Anschlussstutzens 8 hinaus erstreckt, verhindert, dass sich ein Zwischenbereich zwischen der inneren Oberfläche des Milchschlauchs 4 und der äußeren Fläche des Anschlussstutzens 8 ausbildet, wenn der Milchschlauch nach unten abgeknickt wird. Des weiteren ist die Schlauchhülse so ausgebildet, dass eine Kante 25, ab der der zweite Endbereich 22 den gesamten Radius des Milchschlauchs 4 umfasst, so positionierbar ist, dass die Kante 25 in dem aufsteigenden Bereich des Endes des Anschlussstutzens 8 liegt. Damit wird ebenfalls eine Ausbildung eines Zwischenraums zwischen dem Anschlussstutzen 8 und dem Milchschlauch 4 verhindert, wenn der Milchschlauch in Fig. 2 nach oben abgeknickt werden sollte. Erwähnenswert ist, dass die asymmetrische Ausbildung des zweiten Endbereichs 22 in der in Fig. 2 gezeigten Form die Beobachtung des Eingangsbereichs des Anschlussstutzens 8 zulässt, wenn der Milchschlauch 4 aus einem zumindest teilweise transparenten Material hergestellt ist.

Der Vorteil des Verhinderns eines Zwischenraums zwischen dem Milchschlauch 4 und dem Anschlussstutzen 8 beim Abknicken des Milchschlauchs und die damit einhergehende Benetzung des entsprechenden Oberflächenbereiche wird natürlich auch erreicht, wenn der zweite Endbereich 22 in Längsrichtung symmetrisch ausgebildet ist, d.h. die Form eines Rohrstücks aufweist. Ferner ist in dieser Ausführungsform die Schlauchhülse 20 einstückig aus einem harten Kunststoffmaterial gearbeitet, wodurch sich ein haltbares Produkt mit geringen Herstellungskosten ergibt. Die Schlauchhülse 20 kann jedoch aus jedem beliebigen geeigneten Material, wie beispielsweise Metall, Keramik etc., hergestellt werden. Vorzugsweise ist das Material ausreichend fest, um der mechanischen Belastung zu widerstehen, die sich bei einer Trittbelastung durch das zu melkende Tier ergibt.

Weiterhin ist es nicht notwendig, dass, wie in Fig. 2 dargestellt ist, die Schlauchhülse 20 ab der Kante 25 den Milchschlauch 4 vollständig umgibt. Ferner wird vorteilhafterweise der Innendurchmesser der Schlauchhülse 20 so gewählt, dass dieser geringfügig kleiner ist als der Außendurchmesser des Milchschlauchs 4, so dass die Schlauchhülse 20 gut auf und abziehbar ist, wobei gleichzeitig eine Verschiebung in Längsrichtung während des Betriebs der Melkanlage vermieden wird.

Eine vorteilhafte Ausführungsform ergibt sich, wenn die Schlauchhülse 20 eine Spannvorrichtung aufweist, mit der diese am Milchschlauch 4 festgeklemmt wird. Besonders vorteilhaft ist diese Art der Befestigung, wenn die Schlauchhülse zwei- oder mehr teilig ausgeführt ist. So können zum Beispiel zwei Halbschalen vorgesehen sein, die mittels zweier jeweils an den Enden der Halbschalen vorgesehenen Laschen mit den entsprechenden Laschen an der anderen Halbschale mittels Befestigungselementen, wie beispielsweise Schrauben, verbindbar sind. Ferner können die beiden Halbschalen durch ein Schamierelement verbunden sein, so dass die Schlauchhülse 20 aufklappbar ist und mittels einer Spannvorrichtung am Milchschlauch arretierbar ist. Durch den mehrteiligen Aufbau der Schlauchhülse 20 lässt sich diese in einfacher Weise an den bereits an den Anschlussstutzen 8 montierten Milchschläuchen 4 anbringen, wobei kein zeitraubendes und mühsames Abziehen und anschließendes Aufschieben der Milchschläuche auf die Anschlussstutzen 8 notwendig ist.

Fig. 3a und 3b zeigen wiederum Teile des Melkzeugs mit einer Schlauchhülse. In Fig. 3a weist eine Schlauchhülse 30 einen ersten Endbereich 31 mit kreisförmigem Querschnitt sowie einen zweiten Endbereich 32 mit ovalem Querschnitt auf. Fig. 3b zeigt eine Draufsicht auf die Öffnung der Schlauchhülse 30 in Längsrichtung, wobei der ovale Querschnitt des zweiten Endbereichs 32 mit einer durchgezogenen Linie und der kreisförmige Querschnitt des ersten Endbereichs 31 mit einer gestrichelten Linie bezeichnet ist. Durch die ovale Form des Querschnitts des zweiten Endbereichs 32 bildet sich, wenn in Fig. 3 der nicht eingezeichnete Milchschlauch beispielsweise durch das Gewicht des von der Zitze abgezogenen Melkbechers nach unten abgeknickt wird, bevorzugt eine Knickkante aus. Gleichzeitig wird der Milchschlauch gegenüber seitlichen Belastungen verwindungssteifer.

Für die weitere Ausgestaltung der Schlauchhülse 30 gelten im übrigen die gleichen Gesichtspunkte, wie sie zuvor mit Bezug zu Fig. 2 beschrieben wurden.

Fig. 4 zeigt schematisch eine Seitenansicht eines in der erfindungsgemäßen Melkanlage verwandeten Milchschlauchs mit einer Schlauchhülse. An einem Ende eines Milchschlauchs 44 ist eine Schlauchhülse 40 angebracht, die so ausgebildet sein kann, wie dies zuvor mit Bezug zu den Fig. 2 und 3 erläutert wurde. Das andere Ende des Milchschlauchs 44 führt zu einem Melkbecher, der hier nicht dargestellt ist. Ferner weist der Milchschlauch 44 zwischen einem Endbereich 42 der Schlauchhülse 40 und dem Mittelteil des Milchschlauches eine Sollknickstelle 46 auf. Die Sollknickstelle 46 kann beispielsweise durch eine Verringerung der Wandstärke des Milchschlauchs 44 ausgebildet sein. Die Sollknickstelle 44 führt dazu, dass bei einer Auslenkung des Milchschlauchs 44 dieser im Bereich der Sollknickstelle 46 abknickt und eine entsprechende Knickkante ausbildet.

Insbesondere wenn beim Abnehmen des Melkbechers dieser durch sein Gewicht den Milchschlauch 44 in Fig. 4 nach unten abknickt, ergibt sich ein genau definierter Knickbereich, der dazu führt, dass das im Sammelstück und damit im Bereich links (Fig. 4) der Sollknickstelle 46 anliegende Melkvakuum gegenüber dem durch den Melkbecher einströmenden atmosphärischen Druck besonders effizient abgedichtet ist Somit bleibt das Betriebsvakuum beispielsweise beim Transport von einem Tier zum anderen bei nach unten hängenden Melkbechem nahezu unverändert erhalten.

Als insbesondere vorteilhaft erweist es sich, den Milchschlauch 44 aus transparentem Material oder zumindest teilweise aus transparentem Material herzustellen und eine asymmetrische Ausbildung des zweiten Endbereichs 40 vorzusehen, so dass der Bereich der Öffnung des Anschlussstutzens für den Anwender jederzeit gut sichtbar ist. Femer ist es auch denkbar, die Schlauchhülse 40 und den Endbereich des Milchschlauchs 44 in integraler Weise, beispielsweise durch Einbringen eines Versteifungsbereichs in den Milchschlauch bei dessen Herstellung, auszubilden.

In einer weiteren Ausführungsform der erfindungsgemäßen Melkanlage ist der Anschlussstutzen in der Art eines doppelwandigen Rohres ausgebildet, wobei das Innenrohr, das den eigentlichen Anschluss zum flexiblen Verbindungsschlauch bildet, kürzer als das Außenrohr ist. Der Abstand zwischen dem Innenrohr und dem Außenrohr ist dabei so bemessen, dass dieser geringfügig kleiner als die Wandstärke des aufzuschiebenden Endbereichs des Verbindungsschlauch ist. Dadurch ist gewährleistet, dass nach Aufziehen des Verbindungsschlauchs dieser fest am Anschlussstutzen sitzt. Femer ergibt sich durch die vollständige Ummantelung des Endbereichs des Verbindungsschlauchs ein optimaler Schutz gegen jegliche schädigende Einwirkungen auf den Endbereich.

Die Schlauchhülse zur Verwendung in einer automatischen Melkanlage kann so gestaltet sein, wie dies im Zusammenhang mit den Ausführungsformen hinsichtlich der erfindungsgemäßen Melkanlage beschrieben wurde. Durch das vorgegebene Verhältnis zwischen der Länge und dem Innendurchmesser ist zudem sichergestellt, dass der Endbereich über eine zum Erzielen des gewünschten Effekts ausreichenden Länge versteift wird. Da der Innendurchmesser des flexiblen Verbindungsschlauchs in der Regel bei 9-12 mm liegt und die Wandstärke normalerweise mindestens 1 mm beträgt, ist ein Mindestinnendurchmesser von 13 mm für die Schlauchhülse vorzusehen. Jedoch können je nach verwendeten Verbindungsschlauch größere Werte im Bereich von 13 bis 20 mm oder darüber hinaus erforderlich sein. Selbstverständlich kann das Verhältnis der Länge zum Innendurchmesser auch andere Werte aufweisen und beispielsweise vorzugsweise im Bereich von 1,5 und größer, und besonders vorteilhaft im Bereich von 1,5 bis 2. Das Verhältnis kann jedoch auch im Bereich von 2 bis 5 gewählt werden, um die vorteilhafte Wirkung zu erzielen. In den mit Bezug zu den Figuren 2 bis 4 beschriebenen Ausführungsformen beträgt der Innendurchmesser der Schlauchhülse 21 mm und die Länge 40 mm. Femer ist der Innendurchmesser vorzugsweise etwas größer, beispielsweise um 0,5 bis 2mm, als der Außendurchmesser des flexiblen Verbindungsschlauchs, um damit das Aufschieben des Verbindungsschlauchs auf den Anschlussstutzen zu erleichtem.

In einer weiteren Ausführungsform wird die asymmetrische Öffnung des Anschlussstutzens 8 zumindest teilweise von einer Hülse umschlossen. Dabei ist die Länge der Hülse so gewählt, dass der flexible Verbindungsschlauch im aufgeschobenen Zustand mit der Hülse, die somit als eine Innenhülse dient, in Längsrichtung vorzugsweise mehr als 5mm, und insbesondere mindestens 10mm in Kontakt ist. Dabei schließt die Innenhülse bündig mit der Öffnung des Anschlussstutzens ab oder ragt über die Öffnung hinaus. Beim Abbiegen und Abknicken des flexiblen Verbindungsschlauch tritt aufgrund der Elastizität des Schlauchs am kleineren Biegeradius eine zum größeren Biegeradius hin gerichtete Kraft auf, die somit den Schlauch in diesem Bereich noch fester an die Innenhülse presst und dadurch zuverlässig die Ausbildung des Zwischenbereichs 10 verhindert.

Besonders vorteilhaft ist dabei die Bereitstellung einer Sollknickstelle, die beispielsweise durch zwei oder mehrere voneinander beabstandete Verstärkungsringe durch den zwischen zwei benachbarter derartiger Ringe definierter Zwischenbereich ausgebildet sein kann.

Femer kann bei allen Ausführungsformen der Zitzengummi einstückig mit dem flexiblen Verbindungsschlauch ausgebildet sein.

Weiterhin ist es möglich, eine sich bis zum Öffnungsende des Anschlussstutzens oder darüber hinaus erstreckende Versteifung des Milchschlauchs durch eine Herstellung des Schlauchs mit unterschiedlichen Materialien oder Materialmischungen zu erreichen. Dies kann beispielsweise während des Spritzgießens durch Verwenden unterschiedlicher Mischungen für unterschiedliche Schlauchbereiche bewerkstelligt werden.

## Patentansprüche

1. Automatische Melkanlage mit einem Melkbecher (1) und einem Zitzengummi (2), der über einen flexiblen Verbindungsschlauch (24;34;44) mit einem Sammelstück (5) zum Auffangen gemolkener Milch und zum Übertragen eines zum Melken notwendigen Unterdrucks verbunden ist, wobei das Sammelstück (5) einen Anschlussstutzen (8) für den flexiblen Verbindungsschlauch (24;34;44) aufweist, wobei der Anschlussstutzen (8) und/oder der flexible Verbindungsschlauch (24;34;44) so ausgebildet sind, dass bei Auftreten einer Biegebelastung auf den flexiblen Verbindungsschlauch (24;34;44) und beim Abknicken des flexiblen Verbindungsschlauchs (24;34;44) im Anschlussstellenbereich des Anschlussstutzens (8) ein teilweises Ablösen des flexiblen Verbindungsschlauchs (24;34;44) vom Anschlussstutzen (8) verhindert wird, wobei eine zumindest teilweise den flexiblen Verbindungsschlauch umfassende Schlauchhülse (20) an dem Anschlussstellenbereich vorgesehen ist, und der dem Anschlussstutzen (8) abgewandte Endbereich (22) der Schlauchhülse (20) in Längsrichtung asymmetrisch ausgebildet ist, wobei der abgewandte Endbereich (22) in Längsrichtung einer asymmetrischen Form des Anschlussbereichs des Anschlussstutzens (8) angepasst ist, so dass beim Abknicken des Verbindungsschlauchs eine Ausbildung eines Zwischenbereichs zwischen der Innenoberfläche des Verbindungsschlauchs und der gegenüberliegenden Außenfläche des Anschlussstutzens vermieden wird, und wobei der flexible Verbindungsschlauch in Richtung zur Schlauchmitte eine Sollknickstelle (46) vor dem Anschlussstutzen aufweist.

2. Die automatische Melkanlage nach Anspruch 1 oder 2, **dadurch gekennzeichnet, dass**, der Innendurchmesser der Schlauchhülse (20) höchstens gleich dem Außendurchmesser des flexiblen Verbindungsschlauchs (24;34;44) ist und die Schlauchhülse (20) über den Anschlussstutzen (8) hinausragt.

3. Die automatische Melkanlage nach Anspruch 1, **dadurch gekennzeichnet, dass** der abgewandte Endbereich (22) und der andere Endbereich (21) der Schlauchhülse (20) einen kreisförmigen Querschnitt aufweisen.

4. Die automatische Melkanlage nach Anspruch 1, **dadurch gekennzeichnet, dass** der abgewandte Endbereich (22) einen ovalen Querschnitt aufweist.

5. Die automatische Melkanlage nach einem der Ansprüche 1 bis 4, **dadurch gekennzeichnet, dass** der abgewandte Endbereich (22) teilweise an seiner Innenwand eine Vertiefung und/oder Erhebung aufweist, die mit einer entsprechenden Erhebung und/oder Vertiefung an des Außenwand flexiblen Verbindungsschlauchs in Eingriff ist.

6. Die automatische Melkanlage nach einem der Ansprüche 1 bis 5, **dadurch gekennzeichnet, dass** die Schlauchhülse (20) einteilig ausgebildet ist.

7. Die automatische Melkanlage nach einem der Ansprüche 1 bis 6, **dadurch gekennzeichnet, dass** die Schlauchhülse eine Spannvorrichtung zum Festklemmen der Schlauchhülse auf dem flexiblen Verbindungsschlauch umfasst.

8. Die automatische Melkanlage nach einem der Ansprüche 1 bis 7, **dadurch gekennzeichnet, dass** die Schlauchhülse zwei Schalenteile umfasst.

9. Die automatische Melkanlage nach Anspruch 8, **dadurch gekennzeichnet, dass** die zwei Schalenteile durch ein Scharnierelement verbunden sind.

10. Die automatische Melkanlage nach einem der Ansprüche 1 bis 9, **dadurch gekennzeichnet, dass** die Schlauchhülse zumindest teilweise aus einem unelastischen Material hergestellt ist.

11. Die automatische Melkanlage nach einem der Ansprüche 1 bis 10, **dadurch gekennzeichnet, dass** der flexible Verbindungsschlauch zumindest teilweise transparent ist, und der abgewandte Endbereich der Schlauchhülse einen Ausschnitt aufweist, derart, dass im aufgeschobenen Zustand der Endbereich des Anschlussstutzens sichtbar ist.

12. Die automatische Melkanlage nach einem der Ansprüche 1 bis 11, **dadurch gekennzeichnet, dass** der flexible Verbindungsschlauch und der Zitzengummi als eine Einheit ausgebildet sind.

13. Die automatische Melkanlage nach einem der Ansprüche 1 bis 12, **dadurch gekennzeichnet, dass** der flexible Verbindungsschlauch zwei beabstandete Verstärkungsringe vor dem Anschlussstutzen aufweist, so dass zwischen den zwei Verstärkungsringen eine Sollknickstelle definiert ist.

## Claims

1. An automatic milking plant comprising a teat cup (1) and a teat rubber (2) connected via a flexible connection hose (24, 34, 44) to a collecting piece (5) for collecting extracted milk and for transmitting a vacuum required for milking, wherein the collecting piece (5) is provided with a connecting piece (8) for the flexible connection hose (24, 34, 44), wherein the connecting piece (8) and/or the flexible connection hose (24, 34, 44) are implemented such that, when a bending load is applied to the flexible connection hose (24, 34, 44) and when the flexible connection hose (24, 34, 44) kinks, a partial detachment of the flexible connection hose (24, 34, 44) from the connecting piece (8) is prevented in the connection zone of the connecting piece (8), wherein a hose sleeve (20) enclosing the flexible connection hose at least partially is provided in the connection zone, and the end portion (22) of the hose sleeve (20) facing away from the connecting piece (8) is designed asymmetrically in the longitudinal direction, wherein said away-facing end portion (22) matches an assymetrical shape of the connection zone of the connecting piece (8) in the longitudinal direction, so that the formation of an intermediate area between the inner surface of the connection hose and the opposed outer surface of the connection piece will be avoided when the flexible connection hose kinks, and wherein the flexible connection hose is provided with a predetermined kinking point (46) toward the center portion and before the collecting piece.

2. The automatic milking plant according to claim 1 or 2, wherein the inner diameter of the hose sleeve (20) is, at most, equal to the outer diameter of the flexible connection hose (24, 34, 44) and the hose sleeve (20) projects beyond the connecting piece (8).

3. The automatic milking plant according to claim 1, wherein the away-facing end portion (22) and the other end portion (21) of the hose sleeve (20) have a circular cross-section.

4. The automatic milking plant according to claim 1, wherein the away-facing end portion (22) has an oval cross-section.

5. The automatic milking plant according to one of the claims 1 to 4, wherein the away-facing end portion (22) has on part of its inner wall a depression and/or an elevation which is in engagement with a complementary elevation and/or depression on the outer wall of the flexible connection hose.

6. The automatic milking plant according to one of the claims 1 to 5, wherein the hose sleeve (20) is implemented as a one-piece component.

7. The automatic milking plant according to one of the claims 1 to 6, wherein the hose sleeve comprises a clamping device for fixing the hose sleeve in position on the flexible connection hose.

8. The automatic milking plant according to one of the claims 1 to 7, wherein the hose sleeve comprises two shell components.

9. The automatic milking plant according to claim 8, wherein the two shell components are connected by a hinge element.

10. The automatic milking plant according to one of the claims 1 to 9, wherein at least part of the hose sleeve is produced from an inelastic material.

11. The automatic milking plant according to one of the claims 1 to 10, wherein the flexible connection hose is, at least partially, transparent, and the away-facing end portion of the hose sleeve is provided with a cut-out portion in such a way that, in the pushed-on condition, the end portion of the connecting piece is visible.

12. The automatic milking plant according to one of the claims 1 to 11, wherein the flexible connection hose and the teat rubber are formed as a unit.

13. The automatic milking plant according to one of the claims 1 to 12, wherein the flexible connection hose has two spaced reinforcement rings located prior to the connecting piece so that a predetermined kinking point is defined between said two reinforcement rings.

## Revendications

1. Installation de traite automatique avec un gobelet trayeur (1) et un manchon trayeur (2) qui est relié par un tuyau de raccordement flexible (24 ; 34 ; 44) à un élément collecteur (5) destiné à recueillir le lait et à transmettre une dépression nécessaire à la traite, étant précisé que l'élément collecteur (5) comporte un raccord (8) pour le tuyau de raccordement flexible (24 ; 34 ; 44), que ce raccord (8) et/ou ledit tuyau de raccordement (24 ; 34 ; 44) sont conçus pour qu'en cas de contrainte de pliage exercée sur ledit tuyau flexible (24 ; 34 ; 44) et de sa flexion dans la zone du point de raccordement du raccord (8), un détachement partiel du tuyau flexible (24 ; 34 ; 44) par rapport au raccord (8) soit empêché, qu'il est prévu dans la zone du point de raccordement un manchon tubulaire (20) qui entoure au moins partiellement le tuyau de raccordement flexible, que la zone d'extrémité (22) du manchon tubulaire (20) opposée au raccord (8) a une forme asymétrique dans le sens longitudinal, que ladite zone d'extrémité opposée (22) est adaptée dans le sens longitudinal à une forme asymétrique de la zone de raccordement du raccord (8) pour que lors de la flexion du tuyau de raccordement, on évite la formation d'une zone intermédiaire entre la surface intérieure du tuyau de raccordement et la surface extérieure opposée du raccord, et que le tuyau de raccordement flexible présente en direction de son centre un point de flexion (46) avant le raccord.

2. Installation de traite automatique selon la revendication 1, **caractérisée en ce que** le diamètre intérieur du manchon tubulaire (20) est au maximum égal au diamètre extérieur du tuyau de raccordement flexible (24 ; 34 ; 44) et le manchon tubulaire (20) dépasse du raccord (8).

3. Installation de traite automatique selon la revendication 1, **caractérisée en ce que** la zone d'extrémité opposée (22) et l'autre zone d'extrémité (21) du manchon tubulaire (20) présentent une section transversale ronde.

4. Installation de traite automatique selon la revendication 1, **caractérisée en ce que** la zone d'extrémité opposée (22) présente une section transversale ovale.

5. Installation de traite automatique selon l'une des revendications 1 à 4, **caractérisée en ce que** la zone d'extrémité opposée (22) présente en partie, sur sa paroi intérieure, un creux et/ou une bosse qui est en contact avec une bosse et/ou un creux correspondant de la paroi extérieure du tuyau de raccordement flexible.

6. Installation de traite automatique selon l'une des revendications 1 à 5, **caractérisée en ce que** le manchon tubulaire (20) est réalisé d'une seule pièce.

7. Installation de traite automatique selon l'une des revendications 1 à 6, **caractérisée en ce que** le manchon tubulaire comprend un dispositif de serrage pour le bloquer sur le tuyau de raccordement flexible.

8. Installation de traite automatique selon l'une des revendications 1 à 7, **caractérisée en ce que** le manchon tubulaire comprend deux éléments en forme de coques.

9. Installation de traite automatique selon la revendication 8, **caractérisée en ce que** les deux éléments en forme de coques sont reliés par un élément formant charnière.

10. Installation de traite automatique selon l'une des revendications 1 à 9, **caractérisée en ce que** le manchon tubulaire est fabriqué au moins partiellement à partir d'une matière non élastique.

11. Installation de traite automatique selon l'une des revendications 1 à 10, **caractérisée en ce que** le tuyau de raccordement flexible est au moins partiellement transparent et la zone d'extrémité opposée du manchon tubulaire présente une partie découpée, de sorte qu'en position enfilée, la zone d'extrémité du raccord est visible.

12. Installation de traite automatique selon l'une des revendications 1 à 11, **caractérisée en ce que** le tuyau de raccordement flexible et le manchon trayeur sont conçus comme une unité.

13. Installation de traite automatique selon l'une des revendications 1 à 12, **caractérisée en ce que** le tuyau de raccordement flexible comporte devant le raccord deux bagues de renforcement espacées, de sorte qu'un point de flexion est défini entre les deux bagues de renforcement.
